Europäisches Patentamt

European Patent Office

Office européen des brevets

(11) Publication number: **0 076 608**
**B1**

(12) EUROPEAN PATENT SPECIFICATION

(45) Date of publication of patent specification: **30.10.85**

(51) Int. Cl.⁴: **B 60 T 13/46**

(21) Application number: **82305043.0**

(22) Date of filing: **24.09.82**

(54) **Improvements in brake boosters.**

(30) Priority: **01.10.81 GB 8129668**

(43) Date of publication of application:
**13.04.83 Bulletin 83/15**

(45) Publication of the grant of the patent:
**30.10.85 Bulletin 85/44**

(84) Designated Contracting States:
**DE FR**

(56) References cited:
**DE-A-2 163 587**
**FR-A-2 439 113**
**GB-A- 964 289**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Chamberlain, Frederick Alfred William**
**73 Millbank**
**Warwick Warwickshire (GB)**
Inventor: **Morse, David Graham Paul**
**54 Westlea Road**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

This invention relates to vacuum operated brake boosters particularly though not exclusively for use in motor vehicle brake systems. Such boosters reduce the vehicle driver braking effort required to generate a given braking effect.

Vacuum operated brake boosters usually comprise two annular dished pressings flanged together at their outer rims to form a hollow casing. The casing is divided into two chambers by a movable wall which houses a valve assembly arranged to control a differential pressure across the movable wall so as to provide a proportionate increase in output force from the booster for a given input force. The output force from the booster is reacted partly through the casing to the vehicle structure and partly through an input rod to the vehicle driver.

Apportionment of the output force is usually by rubber disc between an output rod on one side and the input rod and movable wall on the other side. The movable wall is almost always co-axial about the input rod.

A first disadvantage arising with certain prior art boosters is that the input rod is retained in a bore of the movable wall by a key inserted through a radial aperture of the housing for the valve assembly and retained in space by the usual flexible diaphragm. Such a construction requires the booster to be assembled in a particular orientation so that the key does not drop out under the influence of gravity. Furthermore, it is desirable that the booster be installed in this orientation in a vehicle so that if the booster diaphragm becomes displaced in service, the key does not drop out and allow the input rod to become loose.

A second disadvantage arising in certain prior art boosters is that for each different size of booster a different movable wall and/or input rod has been required. Further changes have been necessary where for a given size of booster the ratio of output force reacted to the driver's brake pedal has been altered. This has increased the cost and inventory of parts for a range of boosters.

A third disadvantage in such prior art boosters is that the material chosen for the movable wall must be satisfactory as a bearing material for the input rod.

To some extent the aforesaid first and third disadvantages are overcome by a booster according to the preamble of claim 1 and disclosed in FR—A—2 439 113 having an elastomeric disc for transmitting braking loads between, on one side an input member and a power driven movable wall, and on the other side an output member, said movable wall comprising a valve assembly having a bore housing a reaction ring, said input member being reciprocal in said bore, and an inner periphery of the ring forming a bearing surface for a piston with an integral hollow shank held on a ballhead of an input rod which in combination with said piston and shank forms said input member. The piston and encircling reaction ring are both retained within the bore by forming the valve assembly with an integral rim bead about an end of the bore to be abutted by the ring and piston at or about the end of the withdrawal stroke of the input member. Thus it is the relatively expensive valve assembly which must be formed with said beaded rim of sufficiently small diameter to ensure abutment by the bead but not so small as to impede or prevent passage of the shank through the centre of the bead.

It is the object of the present invention to provide a construction of booster capable of overcoming the first, second and third disadvantages, to provide for an increased number of common parts for a range of different sizes of booster, and to avoid the need of having to design the bore in the movable wall with a bead for abutment by the input member in order to retain the member.

According to the invention there is provided a vacuum operated brake booster having an elastomeric disc for transmitting braking loads between, on one side an imput member and a power driven movable wall, and on the other side an output member, said movable wall having a bore housing a reaction ring, said input member being reciprocal in said bore, and an inner periphery of the ring forming a bearing surface for the input member, said reaction ring being adapted to abuttingly engage the movable wall to retain the ring against withdrawal along the direction of retraction stroke of the input member, and the ring comprising an annular portion with an end face for abutment with said elastomeric disc to transmit loads between the disc and said movable wall, characterised in that said ring is provided with at least one leg extending axially of the disc, and said leg has an inwardly directed projection for retaining the input member in the ring.

In one embodiment, at least three said legs are provided each having an inwardly directed said projection at its free end.

Other features of the invention are included in the following description of two preferred embodiments shown by way of example only in the accompanying drawings in which:—

Fig. 1 is a side elevation of a booster with a scrap section therethrough showing details of a conventional booster arrangement;

Fig. 2 is a scrap section through a booster corresponding to Fig. 1 and showing a first embodiment of the invention;

Fig. 3 shows a front view, an axial section through, and a view from behind of a reaction ring according to the first embodiment;

Fig. 4 is a scrap section through a booster corresponding to Fig. 1 and showing an alternative embodiment of the invention; and

Fig. 5 shows a front view, an axial section through and a view from behind of a reaction ring according to the second embodiment.

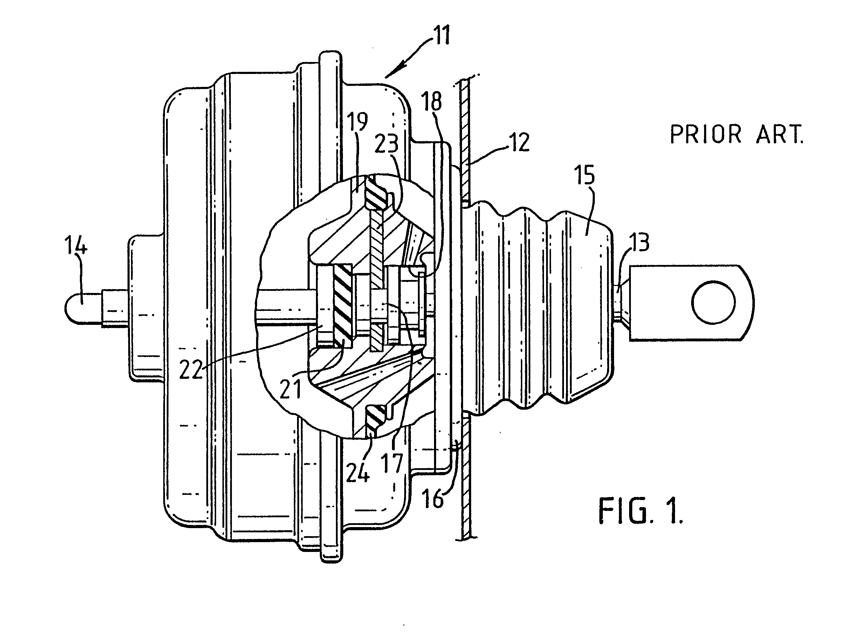

With reference to Fig. 1 of the drawings, there is shown a brake booster 11 secured by bolts (not shown) to a vehicle bulkhead 12. The booster has the usual input rod 13 and output rod 14. A boot 15 for the input rod 13 and booster valve is thickened at one end 16 to form both a resilient mounting and a sealing gasket between the booster and the bulkhead.

The input rod 13 has a piston head 17 on one end thereof which slides in a bore 18 of a valve body 19 which forms part of the movable wall. The piston head 17 and body 19 both act on an elastomeric disc 21, the other side of which abuts a piston head 22 of the output rod 14.

The input rod 13 is retained by a forked key 23 inserted in a radial aperture of the valve body 19. The key is held in position by the usual diaphragm 24.

In use, inward movement of the input rod 13, on application of the driver's brake pedal, loads the piston head 22 through the disc 21. Relative movement of the input rod 13 to the wall 19 opens a boost valve (not shown) to create a differential pressure across the movable wall, the valve body 19 moving to supplement the load of the piston head 17 on the disc 21 and at the same time closing the boost valve. Thus for a given area ratio between the piston head and the movable wall the driver's input load is proportionately reduced dependent on the pressure differential across the wall.

Such an arrangement is very well known and is further described for example in British Patent GB—A—964 289.

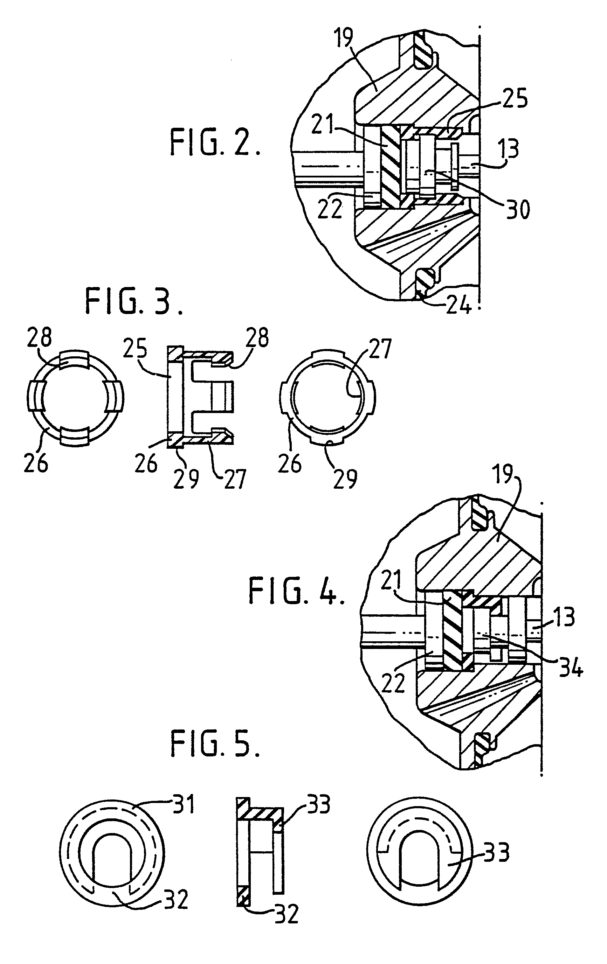

With reference to Figs. 2 and 3 of the drawings, a separate reaction ring 25 is provided between the valve body 19 and the disc 21. The ring 25 comprises an annular portion 26 for abutment with the disc 21 and a plurality of legs 27 which transmit loads between the body 19 and disc 21. At its free end, remote from the disc 21, each leg 27 has a radially inwardly directed projection forming hooked ends 28 which retain the input rod 13 in position. The ring 25 is made of a resilient plastics material. On assembly, the input rod 13 is passed through the valve body, from right to left as viewed, for the legs to be snapped over the input rod head. The rod 13 and ring 25 may then be drawn back into the valve body 19. Clearance is provided for the piston head 30 to move axially relative to the ring 25.

The annular portion is provided with equispaced outwardly extending lugs 29, corresponding to the position of the legs 27, which engage co-operating recesses of the valve body 19. Accordingly the lugs 29 assist in retaining the ring 25 against its withdrawal from the body 19 along the retraction stroke direction of the input member 13.

The lugs 29 both prevent relative rotation between the ring 25 and the valve body 19 and transmit part of the reaction load to the valve body which would otherwise be transmitted wholly through the legs 27. Relative rotation of the ring must be prevented to avoid blocking air passages of the valve body.

In this way the proportion of output load reacted to the driver's brake pedal can be easily altered by changing the size of reaction ring 25 for a given internal diameter of valve body 19 or outside diameter of piston head 30. Thus two valve bodies of different internal diameter and three sizes of piston head 30 will, with an appropriate reaction ring, give six combinations.

The sizes of piston head and reaction ring may be easily changed, the head 30 being typically turned from bar stock and the ring 25 moulded from plastics material, the bore of the ring being changed by insertion of an appropriate diameter plug in the ring mould.

A range of boosters may thus be provided having common control valves and valve bodies which are relatively expensive and complicated parts as compared with the reaction ring 25 and piston head 30.

The second embodiment shown in Fig. 4 and 5 provides an alternative method of retaining the input rod. The reaction ring 31 has a full annulus 32 for abutment with the elastomeric disc 21 and a hook portion 33 for engaging behind the piston head 34 of the input rod 13, the head 34 sliding through the annulus 32 for abutment with the disc 21.

Assembly of this embodiment is as described for the first embodiment, the input rod 13 being pushed through the valve body 19 and the reaction ring being inserted over the piston head 34 before the input rod is pulled back into the valve body to bring the annulus 32 into abutment with the valve body as shown in Fig. 4.

**Claims**

1. A vacuum operated brake booster (11) having an elastomeric disc (21) for transmitting braking loads between, on one side an input member (13) and a power driven movable wall (19), and on the other side an output member (22), said movable wall having a bore housing a reaction ring (25; 31), said input member being reciprocal in said bore, and an inner periphery of the ring forming a bearing surface for the input member, said reaction ring (25; 31) being adapted (27, 29; 32) to abuttingly engage the movable wall (19) to retain the ring against withdrawal along the direction of a retraction stroke of the input member (13), and the ring comprising an annular portion (26; 32) with an end face for abutment with said elastomeric disc (21) to transmit loads between the disc and said movable wall, characterised in that said ring is provided with at least one leg (27; 33) extending axially of the disc, and said leg has an inwardly directed projection (28; 33) for retaining the input member in the ring.

2. A brake booster according to Claim 1, characterised in that at least three legs (27) are provided each having an inwardly directed projection (28) at its free end.

3. A brake booster according to Claim 2, characterised in that said legs (27), in use, transmit braking loads to the movable wall (19).

4. A brake booster according to Claim 3, characterised in that the ring (25) includes outwardly directed projections (29) for engagement in corresponding recesses of the movable wall (19).

5. A brake booster according to Claim 4, characterised in that the angular position of said outwardly directed projections (29) corresponds to the angular position of said legs (27).

6. A brake booster according to any one preceding claim, characterised in that the ring (25; 31) is formed of resilient plastics material, and the, or each, said inwardly directed projection (28; 33) is a snap fit behind a piston head (30; 34) of the input member (13).

## Revendications

1. Dispositif d'assistance de freinage à dépression (11) comprenant un disque en élastomère (21) destiné à transmettre les efforts de freinage entre, d'un côté, l'ensemble d'un élément d'entrée (13) et d'une paroi mobile (19) susceptible d'être mue par une force motrice, et de l'autre côté, un élément de sortie (22), ladite paroi mobile présentant un alésage qui loge une bague de réaction (25; 31), ledit élément d'entrée étant monté à translation alternative dans ledit alésage et une périphérie intérieure de la bague formant une surface de portée pour l'élément d'entrée, ladite bague de réaction (25; 31) étant adaptée (27, 29; 32) pour s'appuyer en butée contre la paroi mobile (19), afin de retenir la bague en l'empêchant de se dégager dans le sens de la course de recul de l'élément d'entrée (13), et la bague comprenant une partie annulaire (26; 32) qui présente une face terminale destinée à buter contre ledit disque en élastomère (21) pour transmettre les efforts entre le disque et ladite paroi mobile, caractérisé en ce que ladite bague est munie d'au moins une branche (27; 33) qui s'étend dans la direction axiale du disque, et en ce que ladite branche possède une protubérance (28; 33) dirigée vers l'intérieur pour retenir l'élément d'entrée dans la bague.

2. Dispositif d'assistance de freinage selon la revendication 1, caractérisé en ce qu'il est prévu au moins trois branches (27) dont chacune présente une protubérance (28) dirigée vers l'intérieur à son extrémité libre.

3. Dispositif d'assistance de freinage selon la revendication 2, caractérisé en ce que, en utilisation, lesdites branches (27) transmettent des efforts de freinage à la paroi mobile (19).

4. Dispositif d'assistance de freinage selon la revendication 3, caractérisé en ce que la bague (25) présente des protubérances (29) dirigées vers l'extérieur et destinées à s'engager dans des cavités correspondantes de la paroi mobile (19).

5. Dispositif d'assistance de freinage selon la revendication 4, caractérisé en ce que la position angulaire desdites protubérances (29) dirigées vers l'extérieur correspond à la position angulaire desdites branches (27).

6. Dispositif d'assistance de freinage selon l'une quelconque des revendications précédentes, caractérisé en ce que la bague (25; 31) est faite d'une matière plastique élastique et que la ou chaque protubérance dirigée vers l'intérieur (28; 33), est ajustée par enclenchement élastique derrière une tête de piston (30; 34) de l'élément d'entrée (13).

## Patentansprüche

1. Mit Unterdruck betriebene Servobremseinrichtung (11) mit einer Elastomerscheibe (21) zum Übertragen von Bremskräften zwischen einem Eingabeteil (13) auf einer Seite und einer kraftbetriebenen beweglichen Wand (19), und einem Ausgabeteil (22) auf der anderen Seite, wobei die bewegliche Wand eine Bohrung hat, in welcher ein Reaktionsring (25; 31) untergebracht ist, wobei das Eingabeteil in der Bohrung hin- und herbeweglich ist und ein innerer Rand des Rings eine Lagerfläche für das Eingabeteil bildet, wobei der Reaktionsring (25; 31) dafür ausgebildet ist (27, 29; 32), an der beweglichen Wand (19) anstoßend anzugreifen, um den Ring gegen ein Zurückziehen längs der Richtung eines Rückzughubes des Eingabeteiles (13) zurückzuhalten, und wobei der Ring einen ringförmigen Abschnitt (26; 32) mit einer Endfläche zum Anstoßen an die Elastomerscheibe (21) zum Übertragen von Kräften zwischen der Scheibe und der beweglichen Wand aufweist, dadurch gekennzeichnet, daß der Ring mit wenigstens einem Arm (27; 33) versehen ist, der sich axial zu der Scheibe erstreckt, und der Arm einen nach innen gerichteten Vorsprung (28; 33) zum Zurückhalten des Eingabeteiles in dem Ring hat.

2. Servobremseinrichtung nach Anspruch 1, dadurch gekennzeichnet, daß wenigstens drei Arme (27) vorgesehen sind, von denen jeder einen nach innen gerichteten Vorsprung (28) an seinem freien Ende hat.

3. Servobremseinrichtung nach Anspruch 2, dadurch gekennzeichnet, daß die Arme (27) in Betrieb Bremskräfte auf die bewegliche Wand (19) übertragen.

4. Servobremseinrichtung nach Anspruch 3, dadurch gekennzeichnet, daß der Ring (25) nach außen gerichtete Vorsprünge (29) zum Eingriff in entsprechende Ausnehmungen der beweglichen Wand (19) aufweist.

5. Servobremseinrichtung nach Anspruch 4, dadurch gekennzeichnet, daß die Winkellage der nach außen gerichteten Vorsprünge (29) der Winkellage der Arme (27) entspricht.

6. Servobremseinrichtung nach irgendeinem vorhergehenden Anspruch, dadurch gekennzeichnet, daß der Ring (25; 31) aus einem federnd nachgiebigen Plastikmaterial gebildet ist und der oder jeder nach innen gerichtete Vorsprung (28; 33) hinter einem Kolbenkopf (30; 34) des Eingabeteiles (13) eingerastet ist.

PRIOR ART.

FIG. 1.

0 076 608

FIG. 2.

FIG. 3.

FIG. 4.

FIG. 5.